# EUROPÄISCHE PATENTSCHRIFT

(11) **EP 3 762 638 B1**
(45) Veröffentlichungstag und Bekanntmachung des Hinweises auf die Patenterteilung: **02.03.2022**
(21) Anmeldenummer: 19711275.8
(22) Anmeldetag: 08.03.2019
(51) Int. Cl.: F16K 15/08, F04B 39/10, F16K 15/10

(54) **PLATTENVENTIL SOWIE VERFAHREN ZUM BETRIEB DESSELBEN**
DISC VALVE AND METHOD FOR OPERATING THE SAME
SOUPAPE À PLAQUE AINSI QUE SON PROCÉDÉ DE FONCTIONNEMENT

(30) Priorität: 08.03.2018 EP 18160798
(43) Veröffentlichungstag der Anmeldung: 13.01.2021
(73) Patentinhaber: Burckhardt Compression AG, 8404 Winterthur (CH)
(72) Erfinder: SCHULZ, Reiner, 79807 Lottstetten (DE)
(74) Vertreter: Hepp Wenger Ryffel AG
(86) Internationale Anmeldenummer: PCT/EP2019/055895
(87) Internationale Veröffentlichungsnummer: WO 2019/170883

(56) Entgegenhaltungen:
- DE-A1- 2 632 162
- DE-B- 1 231 984
- DE-C- 687 507
- GB-A- 191 306 450
- US-A- 815 186
- US-A- 3 360 006

## Beschreibung

Die Erfindung betrifft ein selbsttätiges Plattenventil sowie ein Verfahren zum Betrieb desselben.

### Stand der Technik

Das Dokument EP 0300989A1 offenbart ein selbsttätiges Plattenventil für einen Kompressor. Dieses Ventil weist den Nachteil auf, dass während des Betriebs ein grösserer Verschleiss auftritt, insbesondere wenn die abzudichten Druckdifferenz einen Wert von mehr als 100 bar aufweist. Ähnliche Ventile sind auch aus US 3 360 006 A und GB 815 816 A bekannt.

### Darstellung der Erfindung

Aufgabe der Erfindung ist es ein vorteilhafteres Plattenventil auszubilden, das insbesondere auch bei hohen abzudichtenden Druckdifferenzen einen geringen Verschleiss aufweist.

Diese Aufgabe wird gelöst mit einem Plattenventil umfassend die Merkmale von Anspruch 1. Die abhängigen Ansprüche 2 bis 17 betreffen weitere, vorteilhafte Ausgestaltungen. Die Aufgabe wird weiter gelöst mit einem Verfahren zum Betrieb eines selbsttätigen Plattenventils umfassend die Merkmale von Anspruch 18.

Die Aufgabe wird insbesondere gelöst mit einem selbsttätigen Plattenventil umfassend einen Ventilsitz, einen Ventilfänger, eine Längsachse und ein zwischen Ventilsitz und Ventilfänger angeordnetes und in Richtung der Längsachse hin- und her bewegliches Ventilelement, wobei der Ventilsitz eine zum Ventilfänger hin ausgerichtete Stirnseite mit einer Mehrzahl von Ventilsitzöffnungen aufweist, wobei der Ventilsitz eine Mehrzahl von Durchgangskanälen aufweist, welche Fluid leitend mit den Ventilsitzöffnungen verbunden sind, wobei das Ventilelement zumindest ein Dichtelement umfasst, das mit den Ventilsitzöffnungen dichtend zusammenwirkt, und wobei zumindest einige der Durchgangskanäle in zur Längsachse radialen Richtung einen unterschiedlichen Abstand zur Längsachse aufweisen, wobei die Stirnseite des Ventilsitzes eine Mehrzahl von vorzugsweise nutenförmigen Ausnehmungen aufweist, welche an der Stirnseite die Ventilsitzöffnungen bilden, wobei mehrere Durchgangskanäle in dieselbe Ausnehmungen münden, wobei mehrere Durchgangskanäle über die jeweilige Ausnehmung Fluid leitend mit derselben Ventilsitzöffnung verbunden sind, und wobei zumindest einige dieser mit derselben Ventilsitzöffnung Fluid leitend verbundenen Durchgangskanäle unterschiedliche Abstände zur Längsachse aufweisen.

Die Aufgabe wird weiter insbesondere gelöst mit einem Verfahren zum Betrieb eines selbsttätigen Plattenventils umfassend einen Ventilsitz, einen Ventilfänger, eine Längsachse und ein zwischen Ventilsitz und Ventilfänger angeordnetes und in Richtung der Längsachse hin- und her bewegliches Ventilelement, wobei der Ventilsitz an dessen Stirnseite eine Mehrzahl von Ventilsitzöffnungen aufweist, wobei die Ventilsitzöffnungen durch das bewegliche Ventilelement geöffnet und geschlossen werden, wobei ein Fluid über eine Mehrzahl von im Ventilsitz verlaufende Durchgangskanäle den Ventilsitzöffnungen zugeführt wird, wobei die Stirnseite des Ventilsitzes eine Mehrzahl von nutenförmigen Ausnehmungen aufweist, welche an der Stirnseite die Ventilsitzöffnungen bilden, wobei ein Fluid über eine Mehrzahl von im Ventilsitz verlaufende Durchgangskanäle und anschliessend über die Ausnehmungen den Ventilsitzöffnungen zugeführt wird, und wobei das Fluid beidseitig durch separate, bezüglich der Längsachse in radialer Richtung beabstandete Durchgangskanäle einer jeweiligen Ausnehmung und anschliessend einer jeweiligen Ventilsitzöffnung zugeführt wird.

Das erfindungsgemässe Plattenventil ist insbesondere für Kolbenkompressoren geeignet. Das Plattenventil ist jedoch auch für andere Anwendungen geeignet, beispielsweise als Rückschlagventil in einer verfahrenstechnischen Anlage oder in Kombination mit einer Pumpe. Es hat sich gezeigt, dass bei einem selbsttätig wirkenden, bei Kolbenkompressoren verwendeten Plattenventil das Ventilelement in den seltensten Fällen plan auf den Ventilsitz auftrifft. Der beim Plattenventil auftretende Verschleiss ist deshalb weniger durch die mittlere Flächenpressung zwischen Ventilsitz und Ventilelement bedingt, sondern viel mehr durch Kantenpressungen zwischen dem sich bewegenden Ventilelement und der fest angeordneten Sitzfläche des Ventilsitzes. Es hat sich gezeigt, dass eine Reduktion der nominellen Flächenpressung durch Verbreitern der Auflage beim Ventilsitz nicht notwendigerweise zu einer kleineren Kantenpressung führt. Die Kantenpressung wird bei dem erfindungsgemässen Plattenventil gegenüber bekannten Ausführungen reduziert, indem die aus der Druckdifferenz resultierende Kraft auf eine grössere Gesamtlänge der Dichtkanten verteilt wird. Diese grössere Gesamtlänge der Dichtkanten wird durch eine grössere Anzahl von Öffnungen erreicht, d.h. der zur Verfügung stehende Querschnitt, beziehungsweise die gesamte zur Verfügung stehende Auslassfläche, wird auf eine grössere Anzahl kleinerer Öffnungen aufgeteilt, wodurch sich das Verhältnis von Kantenlänge zu Querschnitt verändert, insbesondere in einen Ausführungsbeispiel bei welchem die Länge der in Umfangsrichtung verlaufenden Ventilsitzöffnungen beibehalten wird, und die radiale Spaltbreite bzw. der Querschnitt der in Umfangsrichtung verlaufenden Ventilsitzöffnung reduziert wird. Jedes Dichtelement weist eine Kante auf, welche auf den Ventilsitz auftreffen kann. Die im Vergleich zu bekannten Plattenventilen schmaleren Ventilsitzöffnungen, beziehungsweise die grössere Anzahl von Dichtelementen mit entsprechenden Kanten hat zur Folge, dass die auf den Ventilsitz einwirkende Kantenpressung reduziert wird. Die Kantenpressung wird reduziert, weil für ein gegebenes Ventil bei der gegebenen Druckdifferenz die Kraft auf die Ventilplatte auf eine grössere Länge der Kanten verteilt wird, d.h. die Kantenpressung ist umgekehrt proportional zur Länge der Kanten. Für Kolbenkompressoren ist der maximale Durchmesser eines Plattenventils üblicherweise vorgegeben, sodass eine Erhöhung der Gesamtlänge der Kanten des Ventilelementes dadurch erzielbar ist, dass die Dichtelemente in radialer Richtung schmaler ausgestaltet werden, um dadurch beim Ventilelement zusätzliche Dichtelemente anzuordnen, was wiederum bedingt, dass die im Ventilsitz angeordnet Ventilsitzöffnungen zumindest in radialer Richtung schmaler auszugestalten sind, vorzugsweise als schmale Schlitze mit einer Breite von beispielsweise 1 mm bis 8 mm, sodass der Ventilsitz eine Mehrzahl von beispielsweise zwischen 2 und 20 Ventilsitzöffnungen aufweist.

Bei einem vorteilhaft ausgestalteten Plattenventil liegt das Verhältnis von maximalem Hub des Ventilelementes zu Breite der Ventilsitzöffnung bei etwa 0.5 oder 0.6. Das erfindungsgemässe Plattenventil weist auf Grund der geringen Spaltbreite von beispielsweise 1 mm bis maximal 5 mm somit auch einen geringen Hub des Ventilelementes auf, was den Vorteil ergibt, dass auf Grund des geringen Hubs der am Plattenventil auftretende Verschleiss zusätzlich reduziert wird.

Die Stirnseite des Ventilsitzes weist eine Mehrzahl von nutenförmigen Ausnehmungen auf, welche an der Stirnseite die Ventilsitzöffnungen bilden, wobei jeweils eine nutenförmige Ausnehmung eine Ventilsitzöffnung ausbildet. Mehrere Durchgangskanäle münden jeweils in dieselbe nutenförmige Ausnehmung. Um jede nutenförmige Ausnehmung beziehungsweise um die durch die nutenförmige Ausnehmung vorgegebene, entsprechende Ventilsitzöffnung mit einer genügenden Menge Fluid zu versorgen, beziehungsweise um den Fluidleitwiderstand innerhalb des Ventilsitzes in Grenzen zu halten, sind im Ventilsitz eine Mehrzahl von Durchgangskanäle angeordnet, wobei zumindest einige der Durchgangskanäle in zur Längsachse radialen Richtung einen unterschiedlichen Abstand zur Längsachse aufweisen, wobei mehrere dieser Durchgangskanäle Fluid leitend mit derselben Ausnehmung und dadurch mit derselben Ventilsitzöffnung verbunden sind, dass zumindest einige dieser mit derselben Ventilsitzöffnung Fluid leitend verbunden Durchgangskanäle unterschiedliche Abstände zur Längsachse aufweisen. Diese Anordnung erlaubt es, auch eine schmale Ventilsitzöffnung mit genügend Fluid zu versorgen.

In einer besonders vorteilhaften Ausgestaltung weist die Stirnseite des Ventilsitzes eine Mehrzahl von vorzugsweise nutenförmigen Ausnehmungen auf, welche an der Stirnseite die Ventilsitzöffnungen bilden, wobei die Durchgangskanäle in die Ausnehmungen münden. Diese Ausführungsform weist den Vorteil auf, dass die Ausnehmungen den Verlauf der Ventilsitzöffnungen an der Stirnseite festlegen, wogegen die Durchgangskanäle in einer Vielzahl von Möglichkeiten und Formen derart im Ventilsitz verlaufend angeordnet sind, dass die Durchgangskanäle Fluid leitend mit den Ausnehmungen verbunden sind. So können die Durchgangskanäle beispielsweise in bezüglich der Längsachse radialer Richtung an zumindest zwei unterschiedlichen Stellen in dieselbe Ausnehmung münden, sowohl an einer bezüglich der Längsachse äusseren Seite der Ausnehmung, als auch an einer bezüglich der Längsachse inneren Seite der Ausnehmung. Eine Ausnehmung kann somit in zur Längsachse radialen Richtung beidseitig beziehungsweise in radialer Richtung an unterschiedlichen Stellen mit Fluid versorgt werden. Zudem können die Durchgangskanäle auch unterschiedliche Durchmesser aufweisen. Vorzugsweise verlaufen die Durchgangskanäle parallel zur Längsachse, wobei die Durchgangskanäle besonders vorteilhaft als Bohrungen ausgestaltet sind.

Das erfindungsgemässe Plattenventil weist den Vorteil auf, dass die Form und/oder der Verlauf der Ausnehmungen in einer Vielzahl von Möglichkeiten beziehungsweise in einer Vielzahl von Formen und Verläufen ausgestaltet sein können, sodass auch der Verlauf der Ventilsitzöffnungen in einer Vielzahl von Formen ausgestaltet sein kann. Die nutenförmigen Ausnehmungen und dadurch auch die Ventilsitzöffnungen können beispielsweise auch kreisförmig, kreisringförmig, kreisringsegmentförmig, kreissegmentförmig, sternförmig, zickzackförmig oder in einer sonstigen Form verlaufen bzw. ausgestaltet sein. Bedingung ist, dass die den Verlauf der Ventilsitzöffnungen definierenden Ausnehmungen mit Durchgangskanälen verbunden sind, und dass das jeweils einer Ventilsitzöffnung zugeordnete Dichtelement dem Verlauf der Ventilsitzöffnung angepasst ist, um mit der jeweiligen Ventilsitzöffnung dichtend zusammen zu wirken. Diese Kombination von Durchgangskanälen und nutenförmigen Ausnehmungen ermöglicht es Ventilsitzöffnungen in einer Vielzahl möglicher Verlaufsformen auszubilden.

Das erfindungsgemässe Plattenventil weist eine Vielzahl von Durchgangskanälen auf, über welche ein Fluid anschliessend den Ausnehmungen und anschliessend den Ventilsitzöffnungen zugeführt wird. Vorzugsweise ist für jede Ausnehmung bzw. Ventilsitzöffnung jeweils zumindest ein äusserer Durchgangskanal und zumindest ein innerer Durchgangskanal vorgesehen, welche bezüglich einer radialen Richtung zur Längsachse beidseitig in dieselbe, die Ventilsitzöffnung ausbildente Ausnehmung münden, um die vorzugsweise schmale Ventilsitzöffnung mit genügend Fluid zu versorgen, beziehungsweise um einen Strömungsverlust bzw. einen Druckverlust an der Ventilsitzöffnung und der Zuleitung durch den Durchgangskanal gering zu halten, vorzugsweise vernachlässigbar klein. Dies ist insbesondere von Bedeutung, wenn über dem Ventilsitz ein Differenzdruck von mehr als 100 bar bis 200 bar anliegt. Vorzugsweise sind eine Mehrzahl von äusseren und inneren Durchgangskanälen in Umfangsrichtung gegenseitig beabstandet angeordnet, wobei diese beidseitig in die nutenförmige Ausnehmung münden. Das erfindungsgemässe Plattenventil weist den Vorteil auf, dass dies auch unter hohem Druck verschleissarm und mit geringem internem Druckabfall betreibbar ist.

Das erfindungsgemässe Plattenventil weist den Vorteil auf, dass das durchströmende Fluid ohne starke Drosselung durch den Ventilsitz fliessen kann, trotz der relativ schmalen, nutenförmigen, die Ventilsitzöffnungen ausbildenden Ausnehmungen, da die nutenförmige Ausnehmungen in radialer Richtung von beiden Seiten mit Fluid versorgt sind, und da die das Fluid zuführenden Durchgangskanäle des Ventilsitzes einen grösseren, vorzugsweise einen wesentlich grösseren Durchmesser, beispielsweise einen zumindest doppelt so grossen Durchmesser, aufweisen können als die Breite der Ventilsitzöffnungen. Die vorzugsweise als Bohrung ausgestalteten Durchgangskanäle können je nach Anordnung unterschiedliche Durchmesser aufweisen, um unter anderem den Strömungswiderstand des Fluids im Durchgangskanal zu reduzieren.

Die Erfindung wird nachfolgend an Hand von Ausführungsbeispielen im Detail beschrieben.

### Kurze Beschreibung der Figuren

Die zur Erläuterung der Ausführungsbeispiele verwendeten Figuren zeigen:
- Fig. 1: einen Schnitt durch ein erstes Ausführungsbeispiel eines Plattenventils;
- Fig. 2: eine Aufsicht eines Ventilsitzes des Plattenventils;
- Fig. 3: eine Untersicht des Ventilsitzes gemäss Figur 2;
- Fig. 4: einen Längsschnitt durch den Ventilsitz gemäss Figur 3 entlang der Schnittlinie A-A;
- Fig. 5: eine Aufsicht eines beweglichen Ventilelements;
- Fig. 6: eine Untersicht eines weiteren Ventilsitzes;
- Fig. 7: einen Schnitt durch ein weiteres Ausführungsbeispiel eines Plattenventils;
- Fig. 8: einen weiteren Längsschnitt durch das erste Ausführungsbeispiel des Plattenventils gemäss Figur 1;
- Fig. 9: eine Aufsicht eines weiteren Ausführungsbeispiels eines Ventilsitzes eines Plattenventils.

Grundsätzlich sind in den Zeichnungen gleiche Teile mit gleichen Bezugszeichen versehen.

### Wege zur Ausführung der Erfindung

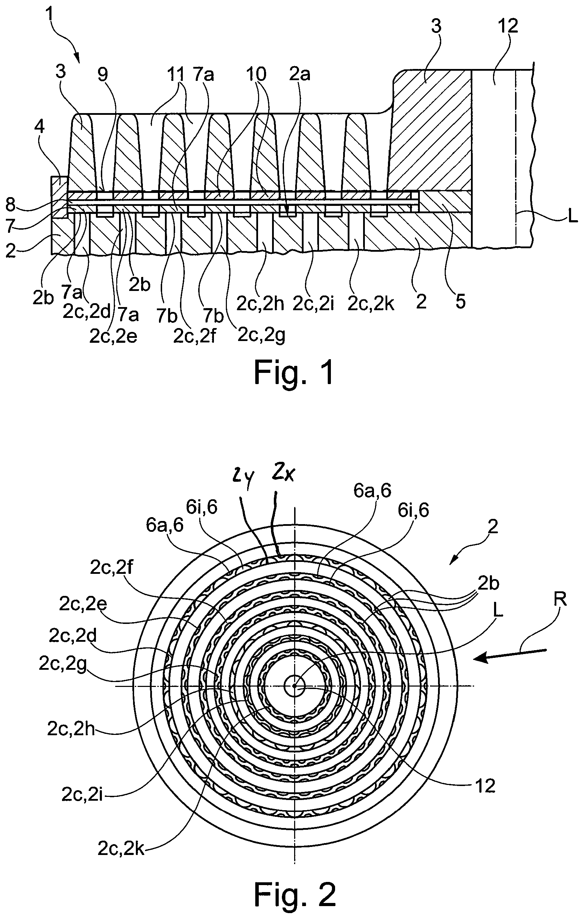

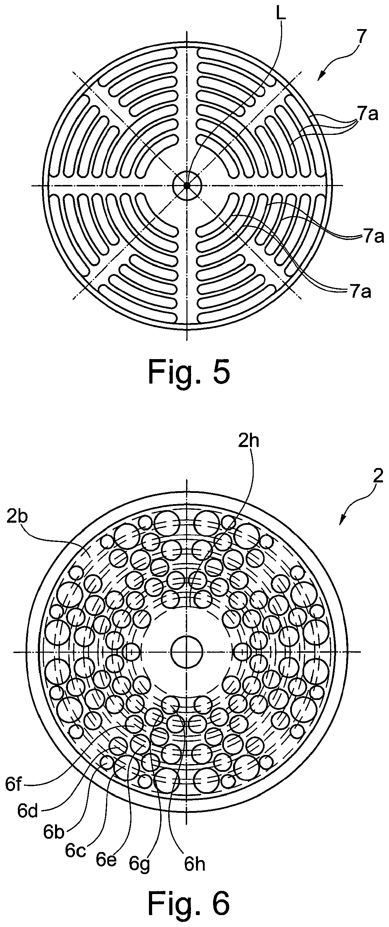

Fig. 1 zeigt in einem Längsschnitt teilweise den oberen Teil eines ersten Ausführungsbeispiels eines Plattenventils 1. Die Figuren 2, 3 und 4 zeigen den in Fig. 1 nur teilweise dargestellten Ventilsitz 2 in einer Aufsicht, einer Untersicht sowie einem Längsschnitt. Zudem zeigt Fig. 5 eine Aufsicht des in Fig. 1 verwendeten Ventilelementes 7.

Das in den Figuren 1 bis 5 dargestellte, selbsttätige, d.h. druckgesteuerte Plattenventil 1 umfasst einen Ventilsitz 2, in welchem eine Mehrzahl von konzentrisch zur Längsachse L verlaufende, nutenförmige Ausnehmungen 2c, 2e - 2k angeordnet sind, welche Fluid leitend mit Durchgangskanälen 6, 6a, 6i verbunden sind. Die nutenförmigen Ausnehmungen 2c, 2e - 2k bilden an der Stirnseite 2a des Ventilsitzes 2 Ventilsitzöffnungen 2b aus. Die Ventilsitzöffnungen 2b sind als um 360° umlaufende Kreisringflächen ausgestaltet, welche vom Ventilelement 7 bzw. dessen Dichtelemente 7a verschlossen bzw. geöffnet werden. Das Ventilelement 7 ist als geschlitzte Ventilplatte ausgestaltet, und besteht vorzugsweise aus Metall wie Stahl oder einem Kunststoff. Das Ventilelement 7 umfasst konzentrisch zur Längsachse L verlaufende Dichtelemente 7a, die, wie in Figur 1 dargestellt, abschnittweise kreisringförmig verlaufend ausgestaltet sind und mit den Ventilsitzöffnungen 2b dichtend zusammenwirken. Der Ventilhub des Ventilelements 7 wird durch einen Fänger 3 begrenzt. Der Fänger 3 umfasst eine Anschlagfläche 9, und umfasst eine Mehrzahl von konzentrisch zur Längsachse L verlaufende, schlitzförmige Abströmöffnungen 11. Der Ventilsitz 2 und der Fänger 3 werden vorzugsweise durch eine nicht dargestellte, in der Bohrung 12 verlaufende Schraube zusammengehalten. In einer vorteilhaften Ausgestaltung umfasst das Plattenventil 1 zudem einen Distanzring 5, eine Dämpferplatte 10 sowie einen Aussenrand 4.

Das dargestellte Plattenventil 1 kann entweder als Saug- oder als Druckventil verwendet werden, wobei diese beiden Ventile prinzipiell den gleichen Aufbau aufweisen, und sich nur durch die Anordnung des Fängers 3 bzw. des Ventilsitzes 2 bezüglich des Arbeitsraums unterscheiden.

Der Ventilsitz 2 umfasst, wie in den Figuren 1 bis 4 dargestellt, vorzugsweise eine Mehrzahl von Ausnehmungen 2c, welche an der Stirnseite 2a die Ventilsitzöffnungen 2b ausbilden. Die Ausnehmungen 2c sind vorzugsweise nutenförmig und konzentrisch zur Längsachse L verlaufend ausgestaltet, sodass die Ventilsitzöffnungen 2b an der Stirnseite 2a ebenfalls konzentrisch zur Längsachse L verlaufen. Der Ventilsitz 2 weist eine Mehrzahl von Durchgangskanälen 6 auf, welche in Richtung der Längsachse L verlaufen, und welche Fluid leitend mit jeweiligen Ausnehmungen 2c und damit auch Fluid leitend mit den Ventilsitzöffnungen 2b verbunden sind. Wie insbesondere aus Figur 2 ersichtlich, ist jede der nutenförmigen Ausnehmungen 2c, in zur Längsachse L radialer Richtung, jeweils über äussere Durchgangskanäle 6a und über innere Durchgangskanäle 6i, welche beide in jeweils dieselbe Ausnehmung 2c münden, mit Fluid versorgt, wobei die äusseren Durchgangskanäle 6a und die inneren Durchgangskanäle 6i einen unterschiedlichen Abstand zur Längsachse L aufweisen, wobei die äusseren Durchgangskanäle 6a an der äusseren Seite 2x in die Ausnehmung 2c münden, und wobei die inneren Durchgangskanäle 6i vorzugsweise beziehungsweise im Wesentlichen an der inneren Seite 2y in die Ausnehmung 2c münden.

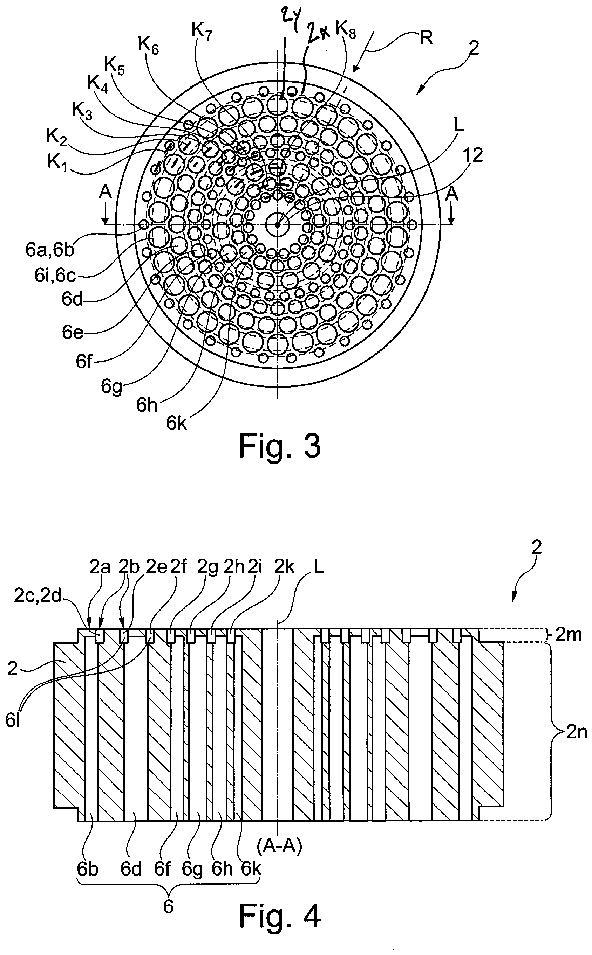

Wie in Figur 2 dargestellt, umfasst der Ventilsitz 2 sieben konzentrisch zur Längsachse L verlaufende, nutenförmige Ausnehmungen 2c, welche Ventilsitzöffnungen 2a ausbilden, nämlich eine erste Ausnehmung 2d, eine zweite Ausnehmung 2e, eine dritte Ausnehmung 2f, eine vierte Ausnehmung 2g, eine fünfte Ausnehmung 2h, eine sechste Ausnehmung 2i und eine siebte Ausnehmung 2k. Wie in Figur 3 dargestellt umfasst der Ventilsitz 2 acht konzentrisch zur Längsachse L und in Richtung der Längsachse L verlaufende, in Umfangsrichtung zur Längsachse L gegenseitig regelmässig beanstandete Durchgangskanäle 6, welche hierin in radialer Richtung R von aussen zur Längsachse L hin bezeichnet werden als erster Durchgangskanal 6b, zweiter Durchgangskanal 6c, dritter Durchgangskanal 6d, vierter Durchgangskanal 6e, fünfter Durchgangskanal 6f, sechster Durchgangskanal 6g, siebter Durchgangskanal 6h, achter Durchgangskanal 6k. Wie in den Figuren 2 und 3 dargestellt münden in jede der Ausnehmungen 2b bis 2h jeweils äussere Durchgangskanäle 6a und innere Durchgangskanäle 6i in bezüglich der Längsachse L radialen Richtung beidseitig in die jeweilige Ausnehmungen 2c, wobei die äusseren Durchgangskanäle 6a bezüglich der Längsachse L zur äusseren Seite 2x hin, und die innere Durchgangskanal 6b bezüglich der Längsachse L zur inneren Seite 2y hin in die jeweilige Ausnehmungen 2c münden. Für die erste Ausnehmungen 2d bildet somit, wie aus den Figuren 2 und 3 ersichtlich, der erste Durchgangskanal 6b den äusseren Durchgangskanal 6a und der zweite Durchgangskanal 6c den inneren Durchgangskanal 6i. Für die zweite Ausnehmungen 2c bildet entsprechend, wie aus den Figuren 2 und 3 ersichtlich, der zweite Durchgangskanal 6c den äusseren Durchgangskanal 6a und der dritte Durchgangskanal 6d den inneren Durchgangskanal 6i. Diese Anordnungsregel wird fortgesetzt bis zur siebten Ausnehmungen 2h, bei welcher der siebte Durchgangskanal 6h den äusseren Durchgangskanal 6a und der achte Durchgangskanal 6k den inneren Durchgangskanal 6i bildet.

In einer bevorzugten Ausgestaltung sind eine Mehrzahl von äusseren Durchgangskanälen 6a und eine Mehrzahl von inneren Durchgangskanälen 6i in Umfangsrichtung konzentrisch zur Längsachse L verlaufend angeordnet, wobei diese vorteilhafterweise, wie in Fig. 3 dargestellt, entlang jeweils einer Kreislinie K1, .. K8 mit demselben Abstand zur Längsachse L in Umfangsrichtung gegenseitig gleichmässig beabstandet angeordnet sind. Es kann sich jedoch auch als vorteilhaft erweisen, wie in Fig. 6 dargestellt, die Durchgangskanäle 6b, 6c, 6d, 6e, 6f, 6g, 6h in Umfangsrichtung unterschiedlich beabstandet anzuordnen. Diese Anordnung weist den Vorteil, dass der Ventilsitz im Bereich, der keine Durchgangskanäle aufweist, mechanisch stabiler ist und der Ventilsitz dadurch dünner ausgestaltet werden kann, was bei einem Druckventil zur Folge hat, dass der Schadraum kleiner bzw. weniger gross ist. Die Durchgangskanäle werden vorzugsweise nur in Bereichen weggelassen, bei denen ohnehin nur ein verringerter Durchfluss zu erwarten wäre, zum Beispiel aufgrund von Versperrungen durch andere Teile wie beispielsweise der Fänger bzw. die im Fänger angeordneten Federn.

Vorteilhafterweise verlaufen die äusseren und inneren Durchgangskanäle 6a, 6i und vorzugsweise alle Durchgangskanäle 6 wie in den Figuren 3 bis 5 dargestellt, in Richtung der Längsachse L bzw. parallel zur Längsachse L. Vorteilhafterweise sind die äusseren Durchgangskanäle 6a und die inneren Durchgangskanäle 6i und vorzugsweise alle Durchgangskanäle 6 als Bohrungen ausgestaltet, vorzugswiese als kreisförmige Bohrungen. Die Durchgangskanäle 6 könnten jedoch auch andere Formen aufweisen, beispielsweise eine quadratische Form.

Das erfindungsgemässe Plattenventil 1 weist, abhängig von dessen Anwendung und dessen Durchmesser, vorzugsweise zwischen drei und 10 Ausnehmungen 2c auf, die vorzugsweise nutenförmig ausgestaltet sind, konzentrisch zur Längsachse L verlaufen, und die Ventilsitzöffnungen 2b ausbilden. In einer möglichen Ausgestaltung umfasst der Ventilsitz 2 zumindest drei nutenförmige Ausnehmungen 2c, ausgehend von aussen in radialer Richtung R zur Längsachse L hin die erste Ausnehmungen 2d, die zweite Ausnehmungen 2e und nachfolgend die dritte Ausnehmungen 2f, wobei jede nutenförmige Ausnehmungen mit einem bezüglich der jeweiligen nutenförmigen Ausnehmungen äusseren Durchgangskanal 6a und einem inneren Durchgangskanal 6i Fluid leitend verbunden ist, vorzugsweise, wie in Figur 4 dargestellt, über Durchgangskanalöffnungen 61.

Vorteilhafterweise sind zwischen zwei in radialer Richtung R zur Längsachse L hin nacheinander angeordneten Paaren von Ausnehmungen, beispielsweise das Paar Ausnehmungen 2d,2e oder das Paar Ausnehmungen 2e,2f, jeweils ein Durchgangskanal 6 angeordnet, der mit beiden Ausnehmungen des jeweiligen Paars 2b,2c bzw. 2c,2d Fluid leitend verbunden ist, wobei dieser Durchgangskanal 6 gleichzeitig sowohl den innere Durchgangskanal 6i der in radialer Richtung R aussen angeordneten Ausnehmung 2d bzw. 2e als auch den äusseren Durchgangskanal 6a der in radialer Richtung R innen angeordneten Ausnehmung 2e bzw. 2f eines jeweiligen Paars Ausnehmungen 2d,2e bzw. 2e,2f ausbildet.

Das erfindungsgemässe Plattenventil 1 weist in einer vorteilhaften Ausgestaltung, wie in Figur 2 dargestellt, einen Ventilsitz 2 mit sieben Ausnehmungen 2d - 2k auf, welche in zur Längsachse L radialen Richtung R gegenseitig beabstandet sind, wobei der Ventilsitz 2 zudem eine Vielzahl von Durchgangskanälen 6 aufweist, welche, wie in Figur 3 dargestellt, entlang von acht konzentrisch zur Längsachse L verlaufenden Kreislinien K1, ..K8 gegenseitig gleichmässig beabstandet angeordnet sind, wobei die Kreislinien K1, .. K8 in zur Längsachse L radialen Richtung gegenseitig beabstandet angeordnet sind. Wie in Figur 3 dargestellt kann die Anzahl der entlang der Kreislinien K1, .. K8 angeordneten Durchgangskanälen 6 zumindest bei einigen Kreislinien K1, .. K8 unterschiedlich sein.

In einer vorteilhaften Ausgestaltung weisen die Durchgangskanäle 6, welche entlang der Kreislinien K1, .. K8 gegenseitig beabstandet angeordnet sind, denselben Durchmesser auf.

In einer vorteilhaften Ausgestaltung weisen in radialer Richtung R nacheinander folgend angeordnete Durchgangskanäle 6 jeweils einen unterschiedlichen Durchmesser auf.

Vorteilhafterweise weisen die Ausnehmungen 2c und somit auch die Ventilsitzöffnungen 2b in zur Längsachse L radialen Richtung eine maximale Breite von 5 mm auf.

Vorteilhafterweise weist das Ventilelement 7 in Richtung der Längsachse L einen maximalen Hub von 0.6 x Breite der Ventilsitzöffnung 2b in mm auf.

Vorteilhafterweise weist der Ventilsitz 2 in Richtung der Längsachse L eine Bauhöhe von zumindest 30 mm auf. Ein solcher Ventilsitz ist vorzugsweise für Drücke im Bereich von 50 bis 1000 bar geeignet.

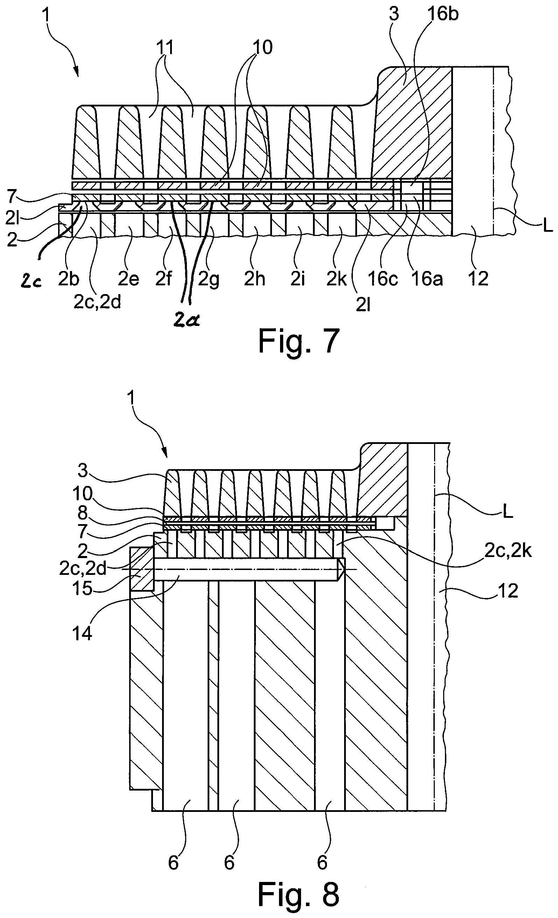

Figur 7 zeigt in einem Längsschnitt eine Teilansicht eines weiteren Ausführungsbeispiels eines Plattenventils 1, bei welchem der Ventilsitz 2, im Unterschied zum Ausführungsbeispiel gemäss Figur 1, unter anderem ein zusätzliches Abschlussteil 2l beziehungsweise eine abnehmbare Sitzplatte 2l aufweist, welches die Spaltbreite der Ventilsitzöffnung 2a in Richtung zum Ventilfänger 3 hin verengt. Dieses Abschlussteil 2l kann Teil eines einstückig ausgebildeten Ventilsitzes 2 sein. Vorteilhafterweise ist das Abschlussteil 2l jedoch als separates Teil ausgestaltet, und an der Oberfläche des Ventilsitzes 2 angeordnet, und vorzugsweise fest oder lösbar mit dem Ventilsitz 2 verbunden. Ein Vorteil dieser Ausgestaltung ist, dass die nutenförmigen Ausnehmungen 2c, ... 2k des Ventilsitzes 2 grösser bzw. breiter dimensioniert werden können, und der Ventilsitz 2 an dessen Auslassöffnung zum Ventilelement 7 hin trotzdem eine schmale Ventilsitzöffnung 2a aufweist. Diese Ausgestaltung ermöglicht insbesondere eine kostengünstige Herstellung des Ventilsitzes 2, da die Ausnehmungen 2c, ... 2k breiter ausgestaltet sind. In einer weiteren, vorteilhaften Ausgestaltung weist das Abschlussteil 2l federnde Eigenschaften auf, um die Bewegung eines auftreffenden Ventilelements 7 abzudämpfen. In einer vorteilhaften Ausgestaltung sind Lenkerfedern vorgesehen, beispielsweise eine erste Lenkerfeder 16a welche Teil des Ventilelements 7 ist, eine zweite Lenkerfeder 16b, welche Teil der Dämpferplatte 10 ist und eine dritte Lenkerfeder 16c, welche Teil des Abschlussteils 2k ist. Die Lenkerfedern haben die Aufgabe die mit Ihnen verbunden Teile insbesondere in Richtung der Längsachse L zu führen, und die mit ihnen verbundenen Teile bei Ruhelage in einer vorbestimmten Lage zu halten.

Figur 8 zeigt in einem Längsschnitt ein weiteres Ausführungsbeispiel eines Plattenventils 1, das einen in Verlaufsrichtung der Längsachse L relativ langen Ventilsitz 2 aufweist, der massiv ausgestaltet sein kann und daher für hohe Drücke im Bereich von zwischen 100 bar und 500 bar geeignet ist. Der obere Teil umfassend den Fänger 3, die Dämpferplatte 10, das Ventilelement 7 sowie die Stirnseite des Ventilsitze 2 mit darin angeordnet Ventilsitzöffnungen 2a ist identisch ausgestaltet zu dem in Figur 1 dargestellten Plattenventil 1. Im Ventilsitz 2 ist zudem eine vertikal zur Längsachse L verlaufende Querbohrung 14 angeordnet, welche gegen Aussen durch einen Verschluss 15 abgedichtet ist. Die Querbohrung 14 bildet eine Fluid leitende Verbindung in zur Längsachse L radialer Richtung zwischen den nutförmigen Ventilsitzöffnungen 2a und gegebenenfalls, wie dargestellt, auch zwischen Durchgangskanälen 6. Diese Querbohrung 14 weist den Vorteil auf, dass damit eine gleichmässigere Strömungsverteilung im Bereich des Eintritts in die Ventilsitzöffnung 2a erzielbar ist. Es können auch eine Mehrzahl von Bohrungen 14 vorgesehen sein, welche in Umfangsrichtung des Ventilsitzes 2 gegenseitig beabstandet angeordnet sind. Die einzelnen Bohrungen 14 können auch unterschliedlich lang ausgestaltet sein, um gewisse, jedoch nicht alle nutförmigen Ausnehmungen 2c bzw. deren Ventilsitzöffnungen 2a Fluid leitend miteinander zu verbinden. Die Bohrungen 14 können radial zur Längsachse L verlaufen, können jedoch auch in einer sonstigen Richtung, senkrecht bezüglich der Längsachse L verlaufen.

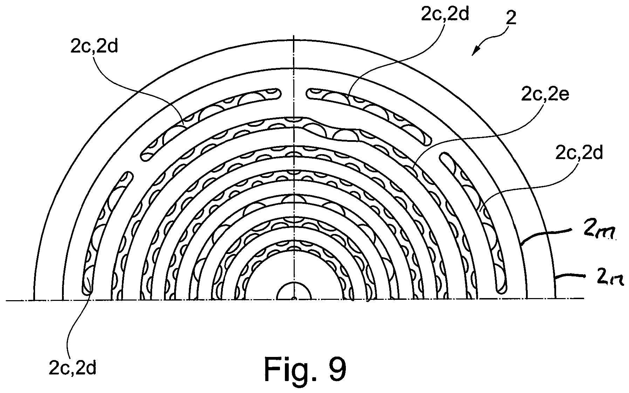

Figur 9 zeigt eine Aufsicht eines weiteren Ausführungsbeispiels eines Ventilsitzes 2 eines Plattenventils. Der Ventilsitz 2 umfasst, wie im Längsschnitt in Figur 4 dargestellt, in Verlaufsrichtung der Längsachse L ein erstes Plattenteil 2m, in welchem die Ausnehmungen 2c angeordnet sind, und in Längsrichtung L unmittelbar nachfolgend ein zweites Plattenteil 2n, in welchem die Durchgangskanäle 6 angeordnet sind. Der Ventilsitz 2 ist vorteilhafterweise einstückig ausgestaltet, umfassend das erste und zweite Plattenteil 2m, 2n. Diese Ausgestaltung des Ventilsitzes 2 weist den Vorteil auf, dass die Ausnehmungen 2c in einer Vielzahl von Formen und/oder Verläufen im ersten Plattenteil 2m angeordnet werden können, derart, dass diese Ausnehmungen 2c mit Durchgangskanälen 6 Fluid leitend verbunden sind. Figur 9 zeigt beispielsweise Ausnehmungen 2c, welche entlang an der Peripherie verlaufend als erste Ausnehmungen 2d ausgestaltet sind, wobei die ersten Ausnehmungen 2d kreisringsegmentförmig ausgestaltet sind, sodass sich die erste Ausnehmung 2d nur über einen Teilwinkel von 360°, beispielsweise 40° erstreckt, sodass der Ventilsitz 2 in Umfangsrichtung jeweils zwischen den Kreisringsegmenten keinen Durchlass aufweist. Die zweite Ausnehmung 2e weist beispielsweise eine Stelle auf, an welcher die Ausnehmung 2c nicht kreisförmig verläuft sondern in radialer Richtung leicht nach innen zur Längsachse L hin ausweicht. Die dadurch verbreiterte Stelle zwischen den beiden Ausnehmungen 2c könnte zum Beispiel dazu dienen ein Befestigungselement anzuordnen, welches den Ventilsitz 2 mit dem Fänger 3 verbindet. Die Ausnehmungen 2c könnten in einer Vielzahl von Formen und Verläufen im ersten Plattenteil 2m angeordnet sein, und beispielsweise auch sternförmig, zickzackförmig, kreisförmig oder in einer sonstigen Form verlaufen, wobei natürlich ein gegengleich ausgestaltetes Ventilelement 7 erforderlich ist, welches die durch den Verlauf der Ausnehmungen 2c bestimmten Verläufe der Ventilsitzöffnungen 2b abdeckt. Diese Vielfalt an Formen der Ausnehmungen 2c ist möglich, weil das zweite Plattenteil 2n eine Grundstruktur ausbildet, und das erste Plattenteil 2m dieser Grundstruktur nachgeordnet ist, wobei das erste Plattenteil 2m mit Ausnehmungen 2c in einer Vielzahl möglicher Formen versehen werden kann, derart, dass die Ausnehmungen 2c jeweils mit Durchgangskanälen 6 verbunden sind. Somit ist es möglichst die Anordnung und Form der Ausnehmungen 2c sowie die Anordnung und Form der Durchgangskanäle 6 weitgehend unabhängig voneinander auszubilden, unter der Bedingung, dass die Durchgangskanäle 6 in die Ausnehmungen 2c münden und mit diesen Fluid leitend verbunden sind. Das erste Plattenteil 2m weist die Mehrzahl von nutenförmigen Ausnehmungen 2c auf, welche an der Stirnseite 2a die Ventilsitzöffnungen 2b bilden, und das zweite Plattenteil 2n weist die Mehrzahl von Durchgangskanälen 6 auf, wobei jeweils mehrere Durchgangskanäle 6 in dieselbe Ausnehmung 2c münden, sodass die mehreren Durchgangskanäle 6 über die jeweilige Ausnehmung 2c Fluid leitend mit derselben Ventilsitzöffnung 2b verbunden sind.

## Patentansprüche

1. Selbsttätiges Plattenventil (1) umfassend einen Ventilsitz (2), einen Ventilfänger (3), eine Längsachse (L) und ein zwischen Ventilsitz (2) und Ventilfänger (3) angeordnetes und in Richtung der Längsachse (L) hin- und her bewegliches Ventilelement (7), wobei der Ventilsitz (2) eine zum Ventilfänger (3) hin ausgerichtete Stirnseite (2a) mit einer Mehrzahl von Ventilsitzöffnungen (2b) aufweist, wobei der Ventilsitz (2) eine Mehrzahl von Durchgangskanälen (6) aufweist, welche Fluid leitend mit den Ventilsitzöffnungen (2b) verbunden sind, wobei das Ventilelement (7) zumindest ein Dichtelement (7a) umfasst, das mit den Ventilsitzöffnungen (2b) dichtend zusammenwirkt, und wobei zumindest einige der Durchgangskanäle (6) in zur Längsachse (L) radialen Richtung (R ) einen unterschiedlichen Abstand zur Längsachse (L) aufweisen, wobei die Stirnseite (2a) des Ventilsitzes (2) eine Mehrzahl von nutenförmigen Ausnehmungen (2c) aufweist, welche an der Stirnseite (2a) die Ventilsitzöffnungen (2b) bilden, wobei mehrere Durchgangskanäle (6) in dieselbe nutenförmige Ausnehmung (2c) münden, wobei diese Durchgangskanäle (6) über die jeweilige nutenförmige Ausnehmung (2c) Fluid leitend mit derselben Ventilsitzöffnung (2b) verbunden sind, **dadurch gekennzeichnet, dass** zumindest einige dieser mit derselben Ventilsitzöffnung (2b) Fluid leitend verbundenen Durchgangskanäle (6) unterschiedliche Abstände zur Längsachse (L) aufweisen.

2. Plattenventil nach Anspruch 1, **dadurch gekennzeichnet, dass** zwischen zwei in radialer Richtung (R) zur Längsachse (L) hin nacheinander angeordneten Paaren von nutenförmigen Ausnehmungen (2d,2e; 2e,2f) jeweils ein Durchgangskanal (6) angeordnet ist, der in beide nutenförmigen Ausnehmungen (2d,2e; 2e,2f) des jeweiligen Paars von nutenförmigen Ausnehmungen (2d,2e; 2e,2f) mündet.

3. Plattenventil nach Anspruch 1 oder 2, **dadurch gekennzeichnet, dass** der Ventilsitz (2) in Verlaufsrichtung der Längsachse (L) ein erstes Plattenteil (2m) und unmittelbar anschliessend ein zweites Plattenteil (2n) umfasst, dass das erste Plattenteil (2m) die Mehrzahl von nutenförmigen Ausnehmungen (2c) aufweist, welche an der Stirnseite (2a) die Ventilsitzöffnungen (2b) bilden, dass das zweite Plattenteil (2n) die Mehrzahl von Durchgangskanälen (6) aufweist, und dass jeweils mehrere Durchgangskanäle (6) in dieselbe Ausnehmung (2c) münden, sodass die mehreren Durchgangskanäle (6) über die jeweilige Ausnehmung (2c) Fluid leitend mit derselben Ventilsitzöffnung (2b) verbunden sind.

4. Plattenventil nach einem der Ansprüche 1 bis 3, **dadurch gekennzeichnet, dass** die Durchgangskanäle (6) als kreisförmige Kanäle ausgestaltet sind.

5. Plattenventil nach einem der Ansprüche 1 bis 4, **dadurch gekennzeichnet, dass** die Durchgangskanäle (6) in bezüglich der Längsachse (L) radialen Richtung an zumindest zwei unterschiedlichen Stellen in dieselbe Ausnehmung (2c) münden, sowohl an einer bezüglich der Längsachse (L) äusseren Seite (2x) der Ausnehmung (2c), als auch an einer bezüglich der Längsachse (L) inneren Seite (2y) der Ausnehmung (2c).

6. Plattenventil nach einem der Ansprüche 1 bis 5, **dadurch gekennzeichnet, dass** die Ausnehmungen (2c) als kreisförmige, kreisringförmige oder kreissegmentförmige, konzentrisch zur Längsachse (L) verlaufende Nuten ausgestaltet sind.

7. Plattenventil nach einem der Ansprüche 1 bis 6, **dadurch gekennzeichnet, dass** jeder der Ausnehmungen (2c) eine Mehrzahl von äusseren Durchgangskanälen (6a) sowie eine Mehrzahl von inneren Durchgangskanälen (6i) zugeordnet sind, die in die jeweilige Ausnehmung (2c) münden, wobei die äusseren Durchgangskanälen (6a) entlang eines ersten Kreises (K1) konzentrisch zur Längsachse (L) und in Umfangsrichtung gegenseitig beabstandet angeordnet sind, und wobei die inneren Durchgangskanälen (6i) entlang eines zweite Kreises (K2) konzentrisch zur Längsachse (L) und in Umfangsrichtung gegenseitig beabstandet angeordnet sind, wobei der erste Kreis (K1) und der zweite Kreis (K2) in radialer Richtung gegenseitig beabstandet sind.

8. Plattenventil nach Anspruch 7, **dadurch gekennzeichnet, dass** die äusseren Durchgangskanäle (6a) und die inneren Durchgangskanäle (6i) in Richtung der Längsachse (L) verlaufen, und dass die äusseren Durchgangskanäle (6a) und die inneren Durchgangskanäle (6i) als Bohrungen ausgestaltet sind.

9. Plattenventil nach Anspruch 7 oder 8, **dadurch gekennzeichnet, dass** der Ventilsitz (2) zumindest drei Ausnehmungen (2c) aufweist, ausgehend von aussen in radialer Richtung (R) zur Längsachse (L) hin eine erste Ausnehmung (2d), eine zweite Ausnehmung (2e) und nachfolgend eine dritte Ausnehmung (2f), und dass in jede der Ausnehmungen (2c) zumindest ein äusserer Durchgangskanal (6a) und zumindest ein innerer Durchgangskanal (6i) mündet.

10. Plattenventil nach Anspruch 9, **dadurch gekennzeichnet, dass** zwischen zwei in radialer Richtung (R) zur Längsachse (L) hin nacheinander angeordneten Paaren von Ausnehmungen (2d,2e; 2e,2f) jeweils ein Durchgangskanal (6) angeordnet ist, der in beide Ausnehmungen des jeweiligen Paar von Ausnehmungen (2d,2e; 2e,2f) mündet, wobei dieser Durchgangskanal (6) sowohl den innere Durchgangskanal (6i) der in radialer Richtung (R) aussen angeordneten Ausnehmung (2d; 2e) als auch den äusseren Durchgangskanal (6a) der in radialer Richtung (R) innen angeordneten Ausnehmung (2e; 2f) eines jeweiligen Paars von Ausnehmungen (2d,2e; 2e,2f) ausbildet.

11. Plattenventil nach einem der Ansprüche 1 bis 10, **dadurch gekennzeichnet, dass** der Ventilsitz (2) zumindest sechs kreisförmige Ventilsitzöffnungen (2b) aufweist, welche in zur Längsachse (L) radialen Richtung (R ) gegenseitig beabstandet sind, dass der Ventilsitz (2) eine Vielzahl von Durchgangskanälen (6) aufweist, welche entlang von konzentrisch zur Längsachse (L) verlaufenden Kreislinien (K1, ..K7) gegenseitig beabstandet angeordnet sind, wobei der Ventilsitz (2) zumindest sieben in zur Längsachse (L) radialen Richtung gegenseitig beabstandet angeordnete Kreislinien (K1, ..K7) aufweist.

12. Plattenventil nach einem der Ansprüche 1 bis 11, **dadurch gekennzeichnet, dass** die Durchgangskanäle (6), welche entlang von konzentrisch zur Längsachse (L) verlaufenden Kreislinien (K1, ..K7) gegenseitig beabstandet angeordnet sind, denselben Durchmesser aufweisen.

13. Plattenventil nach einem der Ansprüche 1 bis 12, **dadurch gekennzeichnet, dass** in radialer Richtung (R) nacheinander folgend angeordnete Durchgangskanäle (6) jeweils einen unterschiedlichen Durchmesser aufweisen.

14. Plattenventil nach einem der Ansprüche 1 bis 13, **dadurch gekennzeichnet, dass** die Ventilsitzöffnungen (2b) in zur Längsachse (L) radialen Richtung eine maximale Breite von 5 mm aufweisen.

15. Plattenventil nach einem der Ansprüche 1 bis 14, **dadurch gekennzeichnet, dass** das Ventilelement (7) in Richtung der Längsachse (L) einen maximalen Hub von 0.6 mal die Breite der Ventilsitzöffnung (2b) aufweist.

16. Plattenventil nach einem der vorhergehenden Ansprüche, **dadurch gekennzeichnet, dass** der Ventilsitz (2) ein Abschlussteil (2l) umfasst, dessen Ausnehmungen (2c) sich in Richtung zum Ventilfänger (3) hin in radialer Richtung verengen, um die radiale Spaltbreite der Ventilsitzöffnung (2b) in Richtung zum Ventilfänger (3) hin zu verengen.

17. Plattenventil nach Anspruch 16, **dadurch gekennzeichnet, dass** das Abschlusssteil (2l) als separates Teil ausgestaltet ist und an der Oberfläche des Ventilsitzes (2) angeordnet ist.

18. Verfahren zum Betrieb eines selbsttätigen Plattenventils (1) umfassend einen Ventilsitz (2), einen Ventilfänger (3), eine Längsachse (L) und ein zwischen Ventilsitz (2) und Ventilfänger (3) angeordnetes und in Richtung der Längsachse (L) hin- und her bewegliches Ventilelement (7), wobei der Ventilsitz (2) an dessen Stirnseite (2a) eine Mehrzahl von Ventilsitzöffnungen (2b) aufweist, wobei die Ventilsitzöffnungen (2b) durch das bewegliche Ventilelement (7) geöffnet und geschlossen werden, wobei die Stirnseite (2a) des Ventilsitzes (2) eine Mehrzahl von nutenförmigen Ausnehmungen (2c) aufweist, welche an der Stirnseite (2a) die Ventilsitzöffnungen (2b) bilden, wobei ein Fluid (F) über eine Mehrzahl von im Ventilsitz (2) verlaufende Durchgangskanäle (6) und anschliessend über die nutenförmigen Ausnehmungen (2c) den Ventilsitzöffnungen (2b) zugeführt wird, **dadurch gekennzeichnet, dass** das Fluid (F) durch separate, bezüglich der Längsachse (L) in radialer Richtung beabstandete Durchgangskanäle (6) einer jeweiligen nutenförmigen Ausnehmung (2c) und anschliessend einer jeweiligen Ventilsitzöffnung (2b) zugeführt wird.

## Claims

1. Automatic plate valve (1) comprising a valve seat (2), a valve catcher (3), a longitudinal axis (L) and a valve element (7) arranged between the valve seat (2) and the valve catcher (3) and movable back and forth in the direction of the longitudinal axis (L), wherein the valve seat (2) has an end face (2a) oriented towards the valve catcher (3) and having a plurality of valve seat openings (2b) wherein the valve seat (2) has a plurality of through channels (6) which are fluid-conductively connected to the valve seat openings (2b), wherein the valve element (7) comprises at least one sealing element (7a) which cooperates in a sealing manner with the valve seat openings (2b) and wherein at least some of the through channels (6) have a different spacing from the longitudinal axis (L) in the direction (R ) radial to the longitudinal axis (L), wherein the end face (2a) of the valve seat (2) has a plurality of groove-shaped recesses (2c) which form the valve seat openings (2b) on the end face (2a), wherein a plurality of through channels (6) open into the same groove-shaped recess (2c), these through channels (6) being connected in a fluid-conducting manner to the same valve seat opening (2b) via the respective groove-shaped recess (2c), **characterized in that** at least some of these through channels (6) connected in a fluid-conducting manner to the same valve seat opening (2b) are at different distances from the longitudinal axis (L).

2. A plate valve according to claim 1, **characterized in that** between two pairs of groove-shaped recesses (2d,2e; 2e,2f) arranged one after the other in the radial direction (R) towards the longitudinal axis (L) there is arranged in each case a through channel (6) which opens into both groove-shaped recesses (2d,2e; 2e,2f) of the respective pair of groove-shaped recesses (2d,2e; 2e,2f).

3. Plate valve according to claim 1 or 2, **characterized in that** the valve seat (2) comprises a first plate part (2m) in the direction of the longitudinal axis (L) and a second plate part (2n) immediately adjacent thereto, **in that** the first plate part (2m) has the plurality of groove-shaped recesses (2c) which form the valve seat openings (2b) on the end face (2a), **in that** the second plate part (2n) has the plurality of through channels (6), and **in that** in each case a plurality of through channels (6) open into the same recess (2c), so that the plurality of through channels (6) are connected in a fluid-conducting manner to the same valve seat opening (2b) via the respective recess (2c).

4. A plate valve according to any one of claims 1 to 3, **characterized in that** the through channels (6) are configured as circular channels.

5. Plate valve according to one of the claims 1 to 4, **characterized in that** the through channels (6) open into the same recess (2c) in the radial direction with respect to the longitudinal axis (L) at at least two different locations, both at an outer side (2x) of the recess (2c) with respect to the longitudinal axis (L) and at an inner side (2y) of the recess (2c) with respect to the longitudinal axis (L).

6. A plate valve according to any one of claims 1 to 5, **characterized in that** the recesses (2c) are configured as circular, circular-ring-shaped or circular-segment-shaped grooves extending concentrically to the longitudinal axis (L).

7. A plate valve according to any one of claims 1 to 6, **characterized in that** each of said recesses (2c) has associated therewith a plurality of outer through channels (6a) and a plurality of inner through channels (6i) opening into the respective recess (2c), said outer through channels (6a) being arranged along a first circle (K1) concentric with the longitudinal axis (L) and mutually spaced in the circumferential direction, and the inner through channels (6i) being arranged along a second circle (K2) concentric with the longitudinal axis (L) and mutually spaced in the circumferential direction, the first circle (K1) and the second circle (K2) being mutually spaced in the radial direction.

8. A plate valve according to claim 7, **characterized in that** the outer through channels (6a) and the inner through channels (6i) extend in the direction of the longitudinal axis (L), and that the outer through channels (6a) and the inner through channels (6i) are designed as bores.

9. Plate valve according to claim 7 or 8, **characterized in that** the valve seat (2) has at least three recesses (2c), starting from the outside in the radial direction (R) towards the longitudinal axis (L), a first recess (2d), a second recess (2e) and subsequently a third recess (2f), and **in that** at least one outer through channel (6a) and at least one inner through channel (6i) open into each of the recesses (2c).

10. Plate valve according to claim 9, **characterized in that** between two pairs of recesses (2d,2e; 2e,2f) arranged one after the other in the radial direction (R) towards the longitudinal axis (L) there is arranged in each case a through channel (6) which opens into both recesses of the respective pair of recesses (2d,2e; 2e,2f), this through channel (6) forming both the inner through channel (6i) of the recess (2d; 2e) arranged on the outside in the radial direction (R) and the outer through channel (6a) of the recess (2e; 2f) arranged on the inside in the radial direction (R) of a respective pair of recesses (2d,2e; 2e,2f).

11. Plate valve according to one of the claims 1 to 10, **characterized in that** the valve seat (2) has at least six circular valve seat openings (2b) which are mutually spaced in the direction (R) radial to the longitudinal axis (L), that the valve seat (2) has a plurality of through channels (6) which are arranged along circular lines (K1, ..K7) extending concentrically to the longitudinal axis (L), wherein the valve seat (2) has at least seven circular lines (K1, ..K7) arranged at a mutual distance in the radial direction to the longitudinal axis (L).

12. A plate valve according to any one of claims 1 to 11, **characterized in that** the through channels (6), which are mutually spaced along circular lines (K1, ..K7) concentric with the longitudinal axis (L), have the same diameter.

13. The plate valve according to any one of claims 1 to 12, **characterized in that** through channels (6) arranged successively in the radial direction (R) each have a different diameter.

14. A plate valve according to any one of claims 1 to 13, **characterized in that** the valve seat openings (2b) have a maximum width of 5 mm in the direction radial to the longitudinal axis (L).

15. A plate valve according to any one of claims 1 to 14, **characterized in that** the valve element (7) has a maximum stroke in the direction of the longitudinal axis (L) of 0.6 times the width of the valve seat opening (2b).

16. A plate valve according to any one of the preceding claims, **characterized in that** the valve seat (2) comprises a closing part (21), the recesses (2c) of which narrow radially towards the valve catcher (3) in order to narrow the radial gap width of the valve seat opening (2b) towards the valve catcher (3).

17. Plate valve according to claim 16, **characterized in that** the end part (21) is designed as a separate part and is arranged on the surface of the valve seat (2).

18. Method for operating an automatic plate valve (1) comprising a valve seat (2), a valve catcher (3), a longitudinal axis (L) and a valve element (7) arranged between the valve seat (2) and the valve catcher (3) and movable to and fro in the direction of the longitudinal axis (L), wherein the valve seat (2) has a plurality of valve seat openings (2b) on its end face (2a), wherein the valve seat openings (2b) are opened and closed by the movable valve element (7), wherein the end face (2a) of the valve seat (2) has a plurality of groove-shaped recesses (2c) which form the valve seat openings (2b) on the end face (2a), wherein a fluid (F) is supplied to the valve seat openings (2b) via a plurality of through channels (6) extending in the valve seat (2) and subsequently via the groove-shaped recesses (2c), **characterised in that** the fluid (F) is supplied to a respective groove-shaped recess (2c) and subsequently to a respective valve seat opening (2b) through separate through channels (6) spaced apart in the radial direction with respect to the longitudinal axis (L).

## Revendications

1. Plaque de soupape automatique (1) comprenant un siège de soupape (2), un collecteur de soupape (3), un axe longitudinal (L) et un élément de soupape (7) disposé entre le siège de soupape (2) et le collecteur de soupape (3) et pouvant être déplacé en va-et-vient dans la direction de l'axe longitudinal (L), le siège de soupape (2) présentant une face d'extrémité(2a) orientée vers le collecteur de soupape (3) et ayant une pluralité d'ouvertures de siège de soupape (2b), dans lequel le siège de soupape (2) présente une pluralité de canaux traversants (6) qui sont reliés avec les ouvertures de siège de soupape (2b) de manière à conduire le fluide, dans lequel l'élément de soupape (7) comprend au moins un élément d'étanchéité (7a) qui coopère de manière étanche avec les ouvertures de siège de soupape (2b), et dans lequel au moins certains des canaux traversants (6) ont une distance différente de l'axe longitudinal (L) dans la direction (R ) radiale à l'axe longitudinal (L), dans lequel la face d'extrémité(2a) du siège de soupape (2) a une pluralité d'évidements en forme de rainure (2c) qui forment les ouvertures de siège de soupape (2b) sur la face d'extrémité(2a), dans lequel plusieurs canaux traversants (6) débouchent dans le même évidement en forme de rainure (2c), ces canaux traversants (6) étant reliés de manière à conduire le fluide à la même ouverture de siège de soupape (2b) via l'évidement respectif en forme de rainure (2c), **caractérisé en ce qu'**au moins certains de ces canaux traversants (6) reliés de manière à conduire le fluide à la même ouverture de siège de soupape (2b) sont à des distances différentes de l'axe longitudinal (L).

2. Plaque de soupape à selon la revendication 1, **caractérisée en ce qu'**entre deux paires d'évidements en forme de rainure (2d, 2e ; 2e, 2f) disposées l'une après l'autre dans la direction radiale (R) vers l'axe longitudinal (L) est disposé à chaque fois un canal traversant (6) qui débouche dans les deux évidements en forme de rainure (2d, 2e ; 2e, 2f) de la paire respective d'évidements en forme de rainure (2d, 2e ; 2e, 2f).

3. Plaque de soupape selon la revendication 1 ou 2, **caractérisée en ce que** le siège de soupape (2) comprend une première partie de plaque (2m) dans la direction de l'axe longitudinal (L) et une seconde partie de plaque (2n) immédiatement adjacente à celle-ci, **en ce que** la première partie de plaque (2m) présente la pluralité d'évidements en forme de rainures (2c), qui forment les ouvertures de siège de soupape (2b) sur la face d'extrémité(2a), **en ce que** la deuxième partie de plaque (2n) présente la pluralité de canaux traversants (6), et **en ce que** plusieurs canaux traversants (6) débouchent chacun dans le même évidement (2c), de sorte que la pluralité de canaux traversant (6) sont reliés de manière à conduire le fluide à la même ouverture de siège de soupape (2b) par l'intermédiaire de l'évidement respectif (2c).

4. Plaque de soupape selon l'une des revendications 1 à 3, **caractérisée en ce que** les canaux traversants (6) sont conçus comme des canaux circulaires.

5. Plaque de soupape selon l'une des revendications 1 à 4, **caractérisée en ce que** les canaux traversants (6) débouchent dans le même évidement (2c) dans la direction radiale par rapport à l'axe longitudinal (L) en au moins deux points différents, à la fois sur un côté extérieur (2x) de l'évidement (2c) par rapport à l'axe longitudinal (L) et sur un côté intérieur (2y) de l'évidement (2c) par rapport à l'axe longitudinal (L).

6. Plaque de soupape selon l'une des revendications 1 à 5, **caractérisée en ce que** les évidements (2c) sont réalisés sous la forme de rainures circulaires, annulaires ou en forme de segments circulaires s'étendant concentriquement à l'axe longitudinal (L).

7. Plaque de soupape selon l'une quelconque des revendications 1 à 6, **caractérisée en ce que** chacun desdits évidements (2c) est associé à une pluralité de canaux traversants extérieurs (6a) et à une pluralité de canaux traversants intérieurs (6i) s'ouvrant dans l'évidement respectif (2c), lesdits canaux traversants extérieurs (6a) étant disposés le long d'un premier cercle (K1) concentrique à l'axe longitudinal (L) et mutuellement espacés dans la direction circonférentielle, et les canaux traversants intérieurs (6i) étant disposés le long d'un second cercle (K2) concentrique à l'axe longitudinal (L) et mutuellement espacés dans la direction circonférentielle, le premier cercle (K1) et le second cercle (K2) étant mutuellement espacés dans la direction radiale.

8. Plaque de soupape selon la revendication 7, **caractérisée en ce que** les canaux traversants extérieurs (6a) et les canaux traversants intérieurs (6i) s'étendent dans la direction de l'axe longitudinal (L), et **en ce que** les canaux traversants extérieurs (6a) et les canaux traversant intérieurs (6i) sont conçus comme des alésages.

9. Plaque de soupape selon la revendication 7 ou 8, **caractérisée en ce que** le siège de soupape (2) présente au moins trois évidements (2c), partant de l'extérieur dans la direction radiale (R) vers l'axe longitudinal (L), un premier évidement (2d), un deuxième évidement (2e) et ensuite un troisième évidement (2f), et **en ce qu'**au moins un canal traversant extérieur (6a) et au moins un canal traversant intérieur (6i) débouchent dans chacun des évidements (2c).

10. Plaque de soupape selon la revendication 9, **caractérisée en ce qu'**entre deux paires d'évidements (2d, 2e ; 2e, 2f) disposées l'une après l'autre dans la direction radiale (R) vers l'axe longitudinal (L) est disposé à chaque fois un canal traversant (6) qui débouche dans les deux évidements de la paire d'évidements respective (2d, 2e) ; 2e, 2f), ce canal traversant (6) formant à la fois le canal traversant intérieur (6i) de l'évidement (2d ; 2e) disposé à l'extérieur dans la direction radiale (R) et le canal travsersant extérieur (6a) de l'évidement (2e ; 2f) disposé à l'intérieur dans la direction radiale (R) d'une paire respective d'évidements (2d, 2e ; 2e, 2f).

11. Plaque de soupape selon l'une des revendications 1 à 10, **caractérisée en ce que** le siège de soupape (2) présente au moins six ouvertures de siège de soupape circulaires (2b) qui sont espacées les unes des autres dans la direction (R ) radiale par rapport à l'axe longitudinal (L), **en ce que** le siège de soupape (2) présente une pluralité de canaux traversants (6) qui sont disposés le long de lignes circulaires (K1, ... K7) s'étendant concentriquement à l'axe longitudinal (L), dans lequel le siège de soupape (2) a au moins sept lignes circulaires (K1, ... K7) disposées à une distance mutuelle dans la direction radiale de l'axe longitudinal (L).

12. Plaque de soupape selon l'une des revendications 1 à 11, **caractérisée en ce que** les canaux traversants (6), qui sont espacés les uns des autres le long de lignes circulaires (K1, ... K7) s'étendant concentriquement à l'axe longitudinal (L), ont le même diamètre.

13. Plaque de soupape selon l'une des revendications 1 à 12, **caractérisée en ce que** les canaux traversants (6) disposés successivement dans la direction radiale (R) ont chacun un diamètre différent.

14. Plaque de soupape selon l'une des revendications 1 à 13, **caractérisée en ce que** les ouvertures du siège de soupape (2b) ont une largeur maximale de 5 mm dans la direction radiale à l'axe longitudinal (L).

15. Plaque de soupape selon l'une quelconque des revendications 1 à 14, **caractérisée en ce que** l'élément de soupape (7) a une course maximale dans la direction de l'axe longitudinal (L) de 0,6 fois la largeur de l'ouverture du siège de soupape (2b).

16. Plaque de soupape selon l'une des revendications précédentes, **caractérisée en ce que** le siège de soupape (2) comprend une partie de fermeture (2l) dont les évidements (2c) se rétrécissent en direction radiale vers le collecteur de soupape (3) afin de réduire la largeur de l'interstice radial de l'ouverture du siège de soupape (2b) vers le collecteur de soupape (3).

17. Plaque de soupape selon la revendication 16, **caractérisée en ce que** la partie d'extrémité (2l) est conçue comme une pièce séparée et est disposée sur la surface du siège de soupape (2).

18. Procédé d'actionnement d'une plaque de soupape automatique (1) comprenant un siège de soupape (2), un collecteur de soupape (3), un axe longitudinal (L) et un élément de soupape (7) disposé entre le siège de soupape (2) et le collecteur de soupape (3) et mobile en va-et-vient dans la direction de l'axe longitudinal (L), le siège de soupape (2) ayant une pluralité d'ouvertures de siège de soupape (2b) sur sa face d'extrémité (2a), les ouvertures de siège de soupape (2b) étant ouvertes et fermées par l'élément de soupape mobile (7), la face d'extrémité (2a) du siège de soupape (2) ayant une pluralité d'évidements en forme de rainure (2c) qui forment les ouvertures de siège de soupape (2b) sur la face d'extrémité(2a), un fluide (F) étant amené aux ouvertures de siège de soupape (2b) via une pluralité de canaux traversants (6) s'étendant dans le siège de soupape (2) et ensuite via les évidements en forme de rainure (2c), **caractérisé en ce que** le fluide (F) est fourni à un évidement respectif en forme de rainure (2c) et ensuite à une ouverture de siège de soupape respective (2b) par des canaux traversants séparés (6) espacés dans la direction radiale par rapport à l'axe longitudinal (L).
